Europäisches Patentamt

European Patent Office

Office européen des brevets

(11) Publication number: **0 150 619**
**B1**

# (12) EUROPEAN PATENT SPECIFICATION

(45) Date of publication of patent specification: **27.04.88**

(21) Application number: **84309041.6**

(22) Date of filing: **21.12.84**

(51) Int. Cl.⁴: **F 02 C 7/232,** F 16 K 11/10

(54) **Flow Dividing valve.**

(30) Priority: **16.01.84 US 571231**

(43) Date of publication of application:
**07.08.85 Bulletin 85/32**

(45) Publication of the grant of the patent:
**27.04.88 Bulletin 88/17**

(84) Designated Contracting States:
**DE FR GB**

(56) References cited:
**DE-A-3 228 079**
**FR-A- 955 596**
**GB-A- 905 754**
**GB-A-2 134 244**
**US-A-2 193 075**
**US-A-3 247 967**
**US-A-3 307 569**
**US-A-3 727 636**

(73) Proprietor: **PARKER HANNIFIN CORPORATION**
**17325 Euclid Avenue**
**Cleveland Ohio 44112 (US)**

(72) Inventor: **Burke, Thomas A.**
**8134 Yorkshire Drive**
**Mentor Ohio 44060 (US)**
Inventor: **Scheuermann, Curtis H.**
**11810 Butternut Road**
**Newbury Ohio 44065 (US)**

(74) Representative: **Purvis, William Michael**
**Cameron et al**
**D. Young & Co. 10 Staple Inn**
**London WC1V 7RD (GB)**

## Description

The invention relates to valves suitable for use in fuel supply systems and, more particularly, to flow dividing valves having a zero flow output condition.

For many years, gas turbine engines have used fuel supply systems that separated fuel flow into a primary flow and a secondary flow. Such engines are generally designed to use the primary flow for starting and at low power requirements. At higher power requirements, the engine requires that the primary flow be supplemented by the secondary flow.

Some fuel supply systems known in the prior art divide fuel flow into primary and secondary flow paths, but have no operational mode in which fuel flow to the engine is completely off. Thus a flow control valve may have two operational modes; one in which only a primary output flow is provided, and one in which both primary and secondary output flows are provided. Thus, at all times, when fluid is provided to the input port of the fuel supply system, at least one output flow results.

For certain applications where a zero output flow condition is required, a shut-off mechanism is placed adjacent the input to the fuel supply system. For example, for gas turbine engines used on aircraft, a manifold leakage control valve may be placed adjacent the inlet to the fuel nozzle. When the engine is off, the manifold leakage control valve shuts off flow to the fuel nozzle. This prevents fuel from flowing through the primary circuit of the fuel nozzles and accumulating in the combustion chamber manifold.

Patent Specification US-A-3 247 967 discloses a valve wherein a helical groove forms a flow path between an inlet and a primary outlet and a valve head co-operating with a valve seat is provided in the flow path between the inlet and a secondary outlet and is biassed closed by a spring, fuel above a determined pressure in a chamber upstream of the valve head causing the valve head to move away from the valve seat to open the valve.

Patent Specification US-A-3 727 636 discloses a flow control valve incorporating a spring biased spool type valve with metering slots co-operating with a large diameter seat to meter the flow with low gain.

While prior art arrangements can afford a shut-off condition for the output flow of the fuel supply system, they require the use of at least two valves and result in increased complexity, maintenance and expense for the overall system. Thus, there is a need for a single valve that can divide an input flow into at least two output flows and that also has a zero output flow condition such that a flow dividing valve can replace prior art fuel supply networks without need for any additional shut-off mechanisms.

According to the invention there is provided a flow dividing valve comprising:
    a valve body having an input port, a primary flow output chamber, and a secondary flow output chamber;
    an outer sleeve within the valve body and co-operating with the valve body to provide a primary flow passage that is in communication with the primary flow output chamber,
    a valve spool movable between a first position where it is seated against a flow valve seat and a second position where maximum clearance is provided between the valve spool and the flow valve seat thereby allowing flow from the input port to the secondary flow output chamber; and
    means for loading the valve spool against the flow valve seat;
    characterised in that:-
    the valve spool is slidable in an inner sleeve;
    the inner sleeve is slidable within the outer sleeve;
    the outer sleeve includes a primary flow valve seat;
    the inner sleeve includes the flow valve seat and is movable between a first position where the inner sleeve is seated against the primary flow valve seat of the outer sleeve and a second position where a gap is provided between the inner sleeve and the primary flow valve seat thereby allowing flow from the input port to the primary flow output chamber; and
    further means are provided for loading the inner sleeve against the primary flow valve seat of the outer sleeve.

Preferably, the outer sleeve includes at least one radial passage and the inner sleeve includes an annular groove that comes into registry with the radial passage when the inner sleeve is moved sufficiently away from the primary flow valve seat. Also preferably, compressing springs load the inner sleeve and the valve spool toward their closed positions.

The invention is diagrammatically illustrated by way of example with reference to the accompanying drawings, in which:

Figure 1 is a cross-sectional view of a preferred embodiment of a flow dividing valve according to the invention taken through the longitudinal centre axis A-A' and showing the valve in its zero output flow position;

Figure 2 is a cross-sectional view of the flow dividing valve of the embodiment of Figure 1 showing the valve in its primary flow position; and

Figure 3 is a cross-sectional view of the flow dividing valve of the embodiment of Figures 1 and 2 showing the valve in its combined primary and secondary flow position.

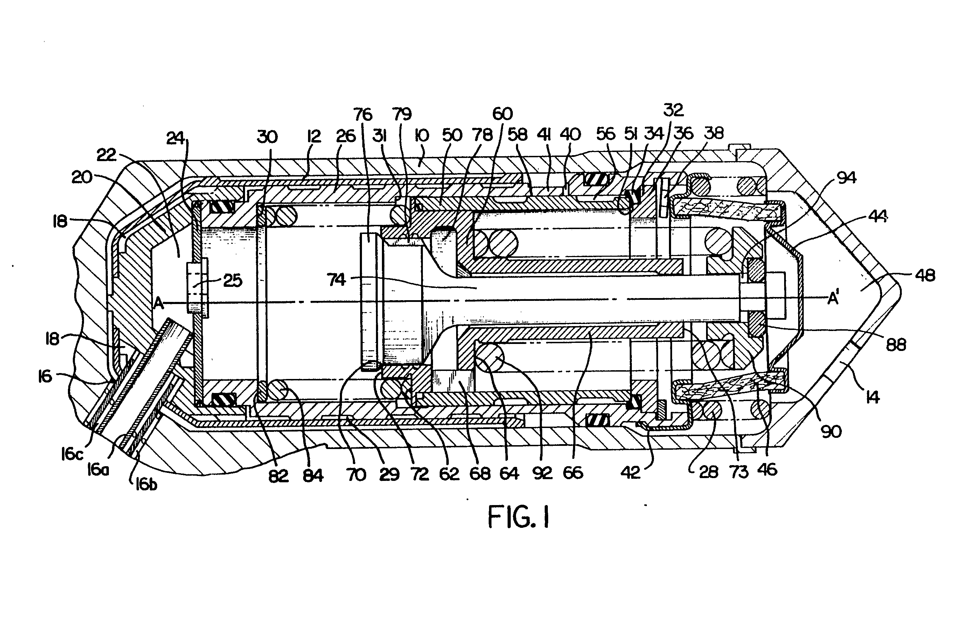

As shown in Figures 1 to 3, a flow dividing valve includes a valve body 10 having a heat shield 12 as a part thereof. The valve body 10 has an input port 14 and an output port 16. Concentrically arranged output tubes 16a and 16b are secured in the output port 16 and provide an annular passage 16c therebetween. The annular passage 16c is in fluid communication with a primary flow output chamber 18 that is defined by the heat shield 12 and a conical frustum valve guide 20.

The tube 16a is in fluid communication with a secondary flow output chamber 22 that is defined by the valve guide 20 and a shim plate 24 that includes a port 25. Thus, the concentrically arranged tubes 16a and 16b co-operate to form an output conduit that provides isolated flow paths from the primary flow output chamber 18 and the secondary flow output chamber 22 through the output port 16.

An outer sleeve 26 is longitudinally aligned with the valve body 10 and is maintained therein against the shim plate 24 by a compression spring 28. The outer sleeve 26 co-operates with the heat shield 12 to form a spiral passage 29 that is in communication with the primary flow output chamber 18. The outer sleeve 26 includes internal shoulders 30 and 31 and a primary flow valve seat 32. The primary flow valve seat 32 includes an o-ring 34 that is maintained by an annular retainer 36. The annular retainer 36 is held in place by a snap ring 38. The outer sleeve 26 also includes a radial passageway 40 that extends through the wall 41 of the outer sleeve 26 at a selected longitudinal location.

The valve body 10 is further provided with a filter asembly that is located adjacent the input port 14. The filter assembly includes brackets 42 and 44 that are connected to an annular filter 46. The bracket 42 is secured between the spring 28 and the adjacent end of the outer sleeve 26 to locate the filter asembly inside the body 10. The bracket 44 and the annular filter 46 co-operate with the body 10 to define an input fluid chamber 48. Fluid entering the input port 14 flows into the input chamber 48 and through the filter 46 where it is radially inward of the outer sleeve 26. Thus, the filter 46 is located to remove particulate contaminates from fluid passing from the chamber 48 through the valve.

An inner sleeve 50 is slidably maintained within the outer sleeve 26 and is movable between a closed position and a fully open position as is hereafter more fully described.

The inner sleeve 50 includes, as an integral part thereof, a spool guide 60 that has a tail portion 66 and end faces 72 and 73 with the end face 72 forming a secondary flow valve seat 70 at the inner radius thereof. The spool guide 60 also includes a primary radial surface 62 and a secondary radial surface 64, with at least one passage 68 through the radial surface 64.

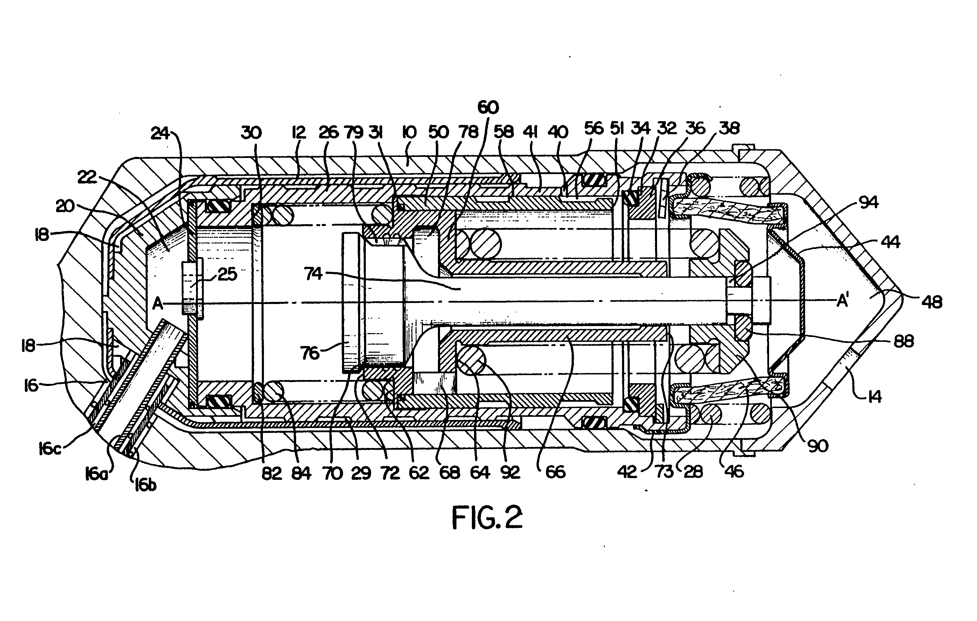

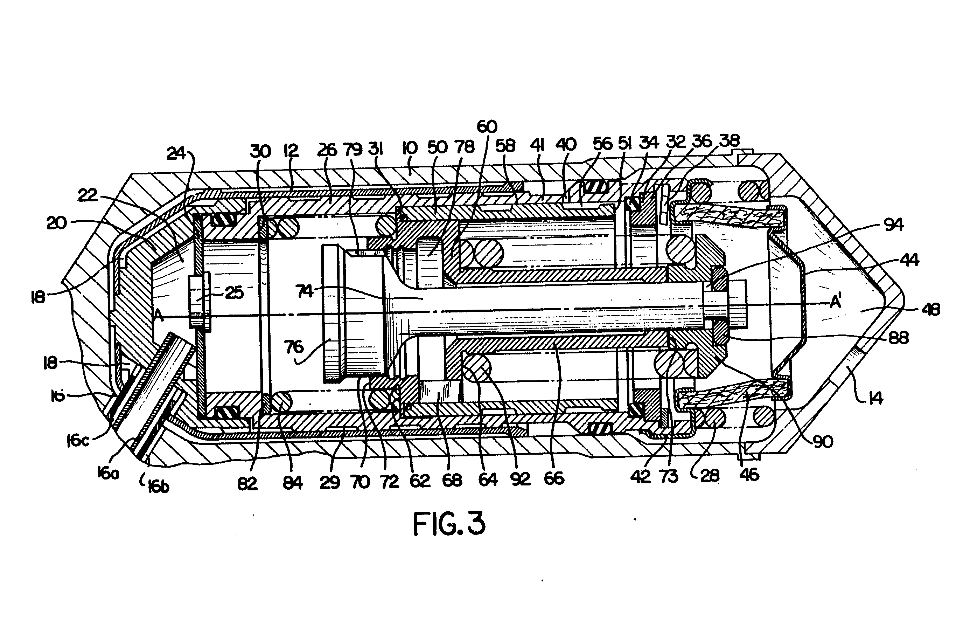

In the closed position an end face 51 of the inner sleeve 50 contacts the o-ring 34 of the valve seat 32 to form a seal therebetween (as shown in Figure 1). In the fully open position the inner sleeve 50, by way of its spool guide 60, contacts the shoulder 31 of the outer sleeve 26 (as shown in Figures 2 and 3). The inner sleeve 50 also includes an annular groove 56 that is located in an outer peripheral surface 58 at a longitudinal position such that, when the inner sleeve 50 is in the fully open position, the annular groove 56 is in registry with the radial passageway 40 in the outer sleeve 26.

A valve spool 74 having a collar 76 is slidably maintained in the spool guide 60 of the inner sleeve 50. The valve spool 74 co-operates with the spool guide 60 to form an annular chamber 78 that is in communication with the filter 46 through the passage 68. As hereafter more fully explained the valve spool 74 is movable between a closed position and a fully open position. In the closed position, the collar 76 engages the secondary flow valve seat 70 (as shown in Figures 1 and 2). In the fully open position, a spring retainer 90 contacts the end face 73 (as shown in Figure 3).

The valve spool 74 includes a plurality of slots 79 that are circumferentially spaced in the peripheral surface of the valve spool 74. One end of the slots 79 communicates with the annular chamber 78 and the other end is located adjacent the collar 76 such that, when the valve spool 74 is in the closed position, the collar 76 and the seat 70 co-operate to seal the end of the slots 79, and when the valve spool 74 is in the open position, the slots 79 are in communication with the secondary flow output chamber 22 through the port 25 of the shim plate 24.

A first loading means urges the inner sleeve 50 toward its closed position (Figure 1) where the end face 51 of the inner sleeve 50 engages the o-ring 34 of the primary flow valve seat 32. The first loading means includes a shim washer 82 and a compression spring 84. The shim washer 82 contacts the shoulder 30 of the outer sleeve 26 and the compression spring 84 acts against the adjacent face of the shim washer 82 and against the primary radial surface 62 of the spool guide 60 to urge the inner sleeve 50 toward its closed position.

A second loading means urges the valve spool 74 toward its closed position (Figures 1 and 2) where the collar 76 of the valve spool engages the secondary flow valve seat 70 of the spool guide 60. The second loading means includes a shim 88, the spring retainer 90 and a compression spring 92. The shim 88 engages an annular groove 94 of the valve spool 74. The spring retainer 90 circumferentially surrounds the valve spool and is located adjacent the shim 88 and between the tail portion 66 of the spool guide 60 and the shim 88. The compression spring 92 circumferentially surrounds the valve spool 74 and the tail portion 66 of the spool guide 60 and is located between the spring retainer 90 and the secondary radial surface 64 of the spool guide 60. The compression spring 92 acts against the adjacent face of the retainer 90 and the secondary radial surface 64 to urge the valve spool 74 toward its closed position.

In the operation of the flow divider valve of the preferred embodiment, Figure 1 shows the valve in a zero output flow position with the end face 51 of the inner sleeve 50 engaging the primary flow valve seat 32 of the outer sleeve 26. Also, the collar 76 of the valve spool 74 engages the secondary flow valve seat 70 of the inner sleeve 50. In this position, no fluid will flow to either the primary flow output chamber 18 or the secondary flow output chamber 22.

In Figure 2, the valve is shown in the position where flow is provided to the primary flow output chamber 18, but no flow is provided to the secondary flow output chamber 22. The collar 76 of the valve spool 74 engages the secondary flow valve seat 70 of the inner sleeve 50 to inhibit secondary flow. However, fluid pressure on the end face 51 of the inner sleeve 50 and faces of the spool guide 60 parallel to the end face 51 has overcome the loading force of the compression spring 84 and shifted the inner sleeve 50 to its open position where the primary radial surface 62 engages the shoulder 31. At the same time, the end face 51 is moved out of sealing engagement with the primary flow valve seat 32 and the annular groove 56 is brought into registry with the radial passageway 40. Thus, a flow path from the input chamber 48 is established through the filter 46 and the gap between the end face 51 and the valve seat 32 and through the annular groove 56, the radial passageway 40, and the spiral passage 29 to the primary flow output chamber 18.

Figure 3 shows the valve in the position where flow is provided to both the primary flow output chamber 18 and the secondary flow output chamber 22. As in Figure 2, the primary radial surface 62 engages the shoulder 31, a gap is established between the end face 51 and the valve seat 32, and the annular groove 56 is in registry with the radial passageway 40 to provide flow to the chamber 18. However, fluid pressure in the annular chamber 78 has been elevated to overcome the loading force of the compression spring 92 and has shifted the valve spool 74 so that the collar 76 is moved out of sealing engagement with the secondary flow valve seat 70. Thus, a flow path from the input chamber 48 is established through the filter 46, the passage 68, the annular chamber 78, the slots 79 and the port 25 of the shim plate 24 to the secondary flow output chamber 22.

**Claims**

1. A flow dividing valve comprising:
a valve body (10) having an input port (14), a primary flow output chamber (18), and a secondary flow output chamber (22);
an outer sleeve (26) within the valve body (10) and co-operating with the valve body (10) to provide a primary flow passage (29) that is in communication with the primary flow output chamber (18),
a valve spool (74) movable between a first position where it is seated against a flow valve seat (70) and a second position where maximum clearance is provided between the valve spool (74) and the flow valve seat (70) thereby allowing flow from the input port (14) to the secondary flow output chamber (22); and
means (88,90,92) for loading the valve spool (74) against the flow valve seat (70);
characterised in that:-
the valve spool (74) is slidable in an inner sleeve (50);

the inner sleeve (50) is slidable within the outer sleeve (26);
the outer sleeve (26) includes a primary flow valve seat (32);
the inner sleeve (50) includes the flow valve seat (70) and is movable between a first position where the inner sleeve (50) is seated against the primary flow valve seat (32) of the outer sleeve (26) and a second position where a gap is provided between the inner sleeve (50) and the primary flow valve seat (32) thereby allowing flow from the input port (14) to the primary flow output chamber (18); and
further means are provided (82,84) for loading the inner sleeve (50) against the primary flow valve seat (32) of the outer sleeve (26).

2. A flow dividing valve according to claim l, wherein the outer sleeve (26) includes radial passageways (40) and wherein the inner sleeve (50) includes an annular groove (56) that co-operates with the radial passageways (40) to carry primary fluid flow when the annular groove (56) is in communication with the passageways (40).

3. A flow dividing valve according to claim 1, wherein the outer sleeve (26) includes radial passageways (40) and wherein the inner sleeve (50) includes an annular groove (56) that is brought into communication with the radial passageways (40) when the inner sleeve (50) is moved away from the primary flow valve seat (32).

4. A flow dividing valve according to any one of claims 1 to 3, wherein the inner valve sleeve (50) includes a primary radial surface (62) and the further means for loading comprises:
a shim (82) that is in contact with the outer sleeve (26); and
a compression spring (84) having one end in contact with the shim (82) and the opposite end in contact with the primary radial surface (62) of the inner valve sleeve (50), the shim (82) and the compression spring (84) co-operating to urge the inner sleeve (50) and the outer sleeve (26) in opposite directions.

5. A flow dividing valve according to any one of claims 1 to 4, wherein the inner valve sleeve (50) includes a secondary radial surface (64) and the means for loading comprises:
a retainer (90) that is connected to the valve spool (74); and
a compression spring (92) having one end in contact with the retainer (90) and the opposite end in contact with the secondary radial surface (64) of the inner valve sleeve (50), the retainer (90) and compression spring (92) co-operating to urge the inner valve sleeve (50) and the valve spool (74) in opposite directions.

6. A flow dividing valve according to any one of claims 1 to 5, wherein the primary flow valve seat (32) comprises:
an annular retaining ring (36); and
an o-ring (34) that is adjacent the retaining ring (36) and that forms a seal between the inner sleeve (50) and the outer sleeve (26) when compressed between the inner sleeve (50) and the retaining ring (36).

## Patentansprüche

1. Ventil für die Verteilung der Strömung, umfassend:

ein Ventilgehäuse (10) mit einer Eintrittsöffnung (14), einer Primärströmungs-Austrittskammer (18) und einer Sekundärströmungs-Austrittskammer (22);

eine Außenbüchse (26) in dem Ventilgehäuse (10) und mit diesem zusammenwirkend zur Bildung eines Primärströmungsdurch gangs (29), der mit der Primärströmungs-Austrittskammer (18) in Verbindung steht;

einen Ventilkörper (74), der hin und her bewegbar ist zwischen einer ersten Stellung, in der er an einem Strömungsventilsitz (70) anliegt, und einer zweiten Stellung, in der ein größtmöglicher Zwischenraum zwischen dem Ventilkörper (74) und dem Strömungsventilsitz (70) besteht und in der eine Strömung von der Eintrittsöffnung (14) zu der Sekundärströmungs-Austrittskammer (22) möglich ist; und

eine Einrichtung (88,90,92), die den Ventilkörper (74) gegen den Strömungsventilsitz (70) drückt,

dadurch gekennzeichnet, daß

der Ventilkörper (74) in einer Innenbüchse (50) verschiebbar ist;

die Innenbüchse (50) in der Außenbüchse (26) verschiebbar ist.

die Außenbüchse (26) einen Primärströmungs-Ventilsitz (32) aufweist;

die Innenbüchse (50) den Strömungsventilsitz (70) trägt und hin und her bewegbar ist zwischen einer ersten Stellung, in der die Innenbüchse (50) auf dem Primärströmungs-Ventilsitz (32) der Außenbüchse (26) aufsitzt, und einer zweiten Stellung, in der ein Zwischenraum zwischen der Innenbüchse (50) und dem Primärströmungs-Ventilsitz (32) verbleibt, wodurch die Strömung von der Eintrittsöffnung (14) in die Primärströmungs-Austrittskammer (18) gelangen kann; und

eine weitere Einrichtung (82,84) vorgesehen ist, die die Innenbüchse (50) gegen den Primärströmungs-Ventilsitz (32) der Außenbüchse (26) drückt.

2. Ventil für die Verteilung der Strömung nach Anspruch 1 dadurch gekennzeichnet, daß die Außenbüchse (26) radiale Durchlässe (40) aufweist, und daß die Innenbüchse (50) eine Ringnut (56) aufweist, die mit den Radialdurchlässen (40) zusammenwirkt, so daß eine Primärströmung fließen kann, wenn die Ringnut (56) mit den Durchlässen (40) in Verbindung steht.

3. Ventil für die Verteilung der Strömung, nach Anspruch 1, dadurch gekennzeichnet, daß die Außenbüchse (26) radiale Durchlässe (40) aufweist, und daß die Innenbüchse (50) eine Ringnut (56) aufweist, die mit den radialen Durchlässen (40) in Verbindung gebracht wird, wenn die Innenbüchse (50) von dem Primärströmungs-Ventilsitz (32) weg bewegt wird.

4. Ventil für die Verteilung der Strömung nach einem der Ansprüche 1 bis 3, dadurch gekennzeichnet, daß die innere Ventilbüchse (50) eine erste Radialfläche (62) aufweist und die weitere Druckausübungsvorrichtung umfaßt:

eine Beilagscheibe (82), die an der Außenbüchse (26) anliegt; und

eine Druckfeder (84), die mit ihrem einen Ende an der Beilagscheibe (82) und mit ihrem anderen Ende an der ersten Radialfläche (62) der inneren Ventilbüchse (50) anliegt, wobei die Beilagscheibe (82) und die Druckfeder (84) zusammenwirken, um die Innenbüchse (50) und die Außenbüchse (26) in entgegenesetzter Richtung zu treiben.

5. Ventil für die Verteilung der Strömung, nach einem der Ansprüche 1 bis 4, dadurch gekennzeichnet, daß die innere Ventilbüchse (50) eine zweite Radialfläche (64) aufweist und die Druckausübungseinrichtung umfaßt:

einen mit dem Ventilkörper (74) verbundenen Halter (90); und eine Druckfeder (92), deren eines Ende an dem Halter (90) und deren anderes Ende an der zweiten Radialfläche (64) der inneren Ventilbüchse (50) anliegt, wobei der Halter (90) und die Druckfeder (92) zusammenwirken um die innere Ventilbüchse (50) und den Ventilkörper (74) in entgegengesetzter Richtung zu treiben.

6. Ventil für die Verteilung der Strömung, nach einem der Ansprüche 1 bis 5, dadurch gekennzeichnet, daß der Primärströmungs-Ventilsitz (32) umfaßt:

einen ringförmigen Haltering (36); und

einen O-Ring (34), der neben dem Haltering (36) sitzt und eine Dichtung zwischen der Innenbüchse (50), und der Außenbüchse (26) bildet, wenn er zwischen der Innenbüchse (50) und dem Haltering (36) zusammengedrückt wird.

## Revendications

1. Soupape de distribution de débit comprenant:

- un corps de soupape (10) comportant un orifice d'entrée (14), une chambre de sortie de débit primaire (18), et une chambre de sortie de débit secondaire (22);

- un manchon extérieur (26) placé dans le corps de soupape (10) et coopérant avec le corps de soupape (10) pour former un passage de débit primaire (29) en communication avec la chambre de sortie de débit primaire (18);

- une bobine de soupape (74) pouvant se déplacer entre une premiére position dans laquelle elle s'appuie contre un siége de soupape de débit (70) et une seconde position dans laquelle un jeu maximum est formé entre la bobine de soupape (74) et le siége de soupape de débit (70), pour permettre ainsi un passage de débit entre l'orifice d'entrée (14) et la chambre de sortie de débit secondaire (22); et

- des moyens (88, 90, 92) pour pousser la bobine de soupape (74) contre le siége de soupape de débit (70); soupape caractérisée en ce que:

- la bobine de soupape (74) peut glisser dans un manchon intérieur (50);
- le manchon intérieur (50) peut glisser à l'intérieur du manchon extérieur (26);
- le manchon extérieur (26) comprend un siége de soupape de débit primaire (32);
- le manchon intérieur (50) comprend le siége de soupape de débit (70) et peut se déplacer entre une premiére position dans laquelle le manchon intérieur (50) vient s'appuyer contre le siége de soupape de débit primaire (32) du manchon extérieur (26), et une seconde position dans laquelle un intervalle est formé entre le manchon intérieur (50) et le siége de soupape de débit primaire (32) pour permettre ainsi le passage d'un débit entre l'orifice d'entrée (14) et la chambre de sortie de débit primaire (18); et
- des moyens supplémentaires (82, 84) sont prévus pour pousser le manchon intérieur (50) contre le siége de soupape de débit primaire (32) du manchon extérieur (26).

2. Soupape de distribution de débit selon la revendication I, caractérisée en ce que le manchon extérieur (26) comporte des passages radiaux (40) et en ce que le manchon intérieur (50) comporte une rainure annulaire (56) coopérant avec les passages radiaux (40) pour assurer le passage du débit de fluide primaire lorsque la rainure annulaire (56) est en communication avec les passages (40).

3. Soupape de distribution de débit selon la revendication 1, caractérisée en ce que le manchon extérieur (26) comporte des passages radiaux (40) et en ce que le manchon intérieur (50) comporte une rainure annulaire (56) qui vient en communication avec les passages radiaux (40) lorsque le manchon intérieur (50) est écarté du siége de soupape de débit primaire (32).

4. Soupape de distribution de débit selon l'une quelconque des revendications 1 à 3, caractérisée en ce que le manchon de soupape intérieur (50) comporte une surface radiale primaire (62) et en ce que les moyens supplémentaires de poussée comprennent:
- une cale (82) en contact avec le manchon extérieur (26); et
- un ressort de compression (84) dont une extrémité est en contact avec la cale (82) et dont l'extrémité opposée est en contact avec la surface radiale primaire (62) du manchon de soupape intérieur (50), la cale (82) et le ressort de compression (84) coopérant pour pousser le manchon intérieur (50) et le manchon extérieur (26) dans des directions opposées.

5. Soupape de distribution de débit selon l'une quelconque des revendications 1 à 4, caractérisee en ce que le manchon de soupape intérieur (50) comporte une surface radiale secondaire (64) et en ce que les moyens de poussée comprennent:
- un élément de retenue (90) relié à la bobine de soupape (74); et
- un ressort de compression (92) dont une extrémité est en contact avec l'élément de retenue (90) et dont l'extrémité opposée est en contact avec la surface radiale secondaire (64) du manchon de soupape intérieur (50), l'élément de retenue (90) et le ressort de compression (92) coopérant pour pousser le manchon de soupape intérieur (50) et la bobine de soupape (74) dans des directions opposées.

6. Soupape de distribution de débit selon l'une quelconque des revendications 1 à 5, caractérisée en ce que le siége de soupape de débit primaire (32) comprend:
- un anneau de retenue annulaire (36); et
- un joint torique (34) placé contre l'anneau de retenue (36) et formant un joint d'étancheité entre le manchon intérieur (50) et le manchon extérieur (26) lorsqu'il est comprimé entre le manchon intérieur (50) et l'anneau de retenue (36).

FIG.I

FIG.2

0 150 619

FIG.3